# EUROPÄISCHE PATENTANMELDUNG

(11) **EP 0 849 845 A2**
(43) Veröffentlichungstag der Anmeldung: **24.06.1998**
(21) Anmeldenummer: 97120726.1
(22) Anmeldetag: 26.11.1997
(51) Int. Cl.: H01S 3/082, H01S 3/06

(54) **Laser mit verschiedenen Emissionsrichtungen**

(30) Priorität: 20.12.1996 DE 19653546
(71) Anmelder: JENOPTIK Aktiengesellschaft, D-07743 Jena (DE)
(72) Erfinder: Koch, Ralf, 10247 Berlin (DE); Hollemann, Günter, 07749 Jena (DE); Voelckel, Hermann, 07768 Kahla (DE)

(57) **Zusammenfassung**

Die Erfindung betrifft einen Laser, der simultan oder alternativ Strahlung gleicher oder unterschiedlicher Betriebsart in beliebige Richtungen innerhalb eines bestimmten Raumwinkels emittieren kann.

## Beschreibung

Laser bestehen aus einem aktiven Element, das von einer Strahlungsquelle üblicherweise mittels einer Koppeloptik gepumpt wird und einem Resonator. Der Resonator ermöglicht durch die optische Rückkopplung über ein teildurchlässiges Auskoppelelement und ein hochreflektierendes Resonatorelement den Laserbetrieb. Festkörperlaser zeichnen sich gegenüber anderen Lasern besonders durch die große Anzahl ihrer möglichen Betriebsarten aus. So ist es beispielsweise möglich, durch die Wahl einer geeigneten Resonatoranordnung folgende Betriebsarten zu realisieren:
1. Dauerstrichbetrieb oder gepulster Laserbetrieb
2. Transversaler Grundmodebetrieb mit annähernd beugungsbegrenztem Strahl oder Betrieb bei herabgesetzter Strahldichte
3. Auskopplung der fundamentalen Strahlung im infraroten Spektralbereich oder Frequenzkonversion durch höhere Harmonischen-Erzeugung im sichtbaren oder ultravioletten Spektralbereich oder durch andere optisch nichtlineare Frequenzkonversionsmethoden (Kombinationslaser)
4. Oszillation bei verschiedenen Laserwellenlängen, sowohl für Medien, die auf vielen diskreten Linien emittieren, als auch für kontinuierlich durchstimmbare vibronische Festkörperlaser, wie z.B. Titan-Saphir-Laser mit kontinuierlichen Spektren (Mehrwellenlängenlaser)
5. Kaskadenlaser, bei dem die Festkörperlaser-Emission einen zweiten Kristall pumpt
6. Ein oder mehrere aktive Elemente in einem Resonator

Es gibt eine Vielzahl von Anwendungsfällen, in denen alternativ oder simultan verschiedene Betriebsarten benötigt werden.
Beispielsweise werden in der Laserchirurgie zum Schneiden und Koagulieren von Gewebe oder in der Lasermaterialbearbeitung alternativ oder simultan Laserstrahlungen unterschiedlicher Wellenlänge benötigt.

Um unterschiedliche Laserstrahlungen mit einem Gerät zu realisieren, können als technisch triviale Lösung mehrere Laser in dem Gerätegehäuse untergebracht werden (z.B. DE 28 09 007 A1). Der Anzahl der Laser sind jedoch aufgrund der äquivalent anwachsenden Gerätegröße, des -gewichtes und der -kosten enge Grenzen gesetzt.
Handelt es sich bei den gewünschten Laserstrahlungen lediglich um Strahlungen unterschiedlicher Wellenlänge, die theoretisch mit dem gleichen aktiven Element erreichbar sind, können diese, wie aus dem Stand der Technik bekannt, mit nur einem Laser erzeugt werden. Dieser Laser umfaßt dann neben dem aktiven Element mehrere Resonatoren, von denen jeder eine der gewünschten Wellenlängen reflektiert.
Bei sämtlichen aus dem Stand der Technik bekannten Lösungen wird durch die Geometrie des aktiven Elements (z.B. stabförmig) die Lage der optischen Achse für den Resonatoraufbau vorgegeben. Das bedeutet insbesondere, daß im Falle mehrerer Resonatoren diese kollinear angeordnet sein müssen und infolgedessen Resonatorelemente bewegt werden müssen oder Effektivitätsverluste durch den Einsatz von Prismen auftreten.

In der DE 37 13 635 A1 ist ein Laser für zwei Wellenlängen beschrieben, bestehend aus einem aktiven Element und zwei Resonatoren, welche jeweils von dem gleichen halbdurchlässigen Austrittsspiegel und einem Spiegel unterschiedlicher Reflexionscharakteristik gebildet werden. Die Elemente des Lasers sind auf der durch das aktive Element vorgegebenen optischen Achse wie folgt hintereinander angeordnet: halbdurchlässiger Spiegel, aktives Element, erster Spiegel, Verschluß, zweiter Spiegel. Der erste Spiegel reflektiert die Strahlung einer ersten Wellenlänge und läßt die Strahlung einer zweiten Wellenlänge hindurch, während der zweite Spiegel die Strahlung der zweiten Wellenlänge reflektiert. Alternativ kann dieser Laser mit Hilfe des Verschlusses entweder nur Laserstrahlung der ersten Wellenlänge oder zweiten Wellenlänge emittieren.

Auch in der DE 35 00 900 A1 ist ein Laser beschrieben, welcher alternativ zwei verschiedene Wellenlängen emittieren kann. Hier wird eine im Resonatorraum angeordnete Gasküvette entweder evakuiert oder mit einem geeigneten Gas gefüllt, wodurch sie als ein spektral selektiver Absorber wirkt. Mit evakuierter Gasküvette emittiert der Laser bei 10,6 µm und ist zur Weichteilchirurgie geeignet. Wird die Gasküvette mit einem geeigneten Gas gefüllt, wird die sonst stärkere Laserlinie von 10,6 µm unterdrückt und der Laser emittiert bei 9,6 µm, womit er für die Hartgewebs-Chirurgie geeignet ist.

Die Möglichkeit, mit zwei unterschiedlichen Wellenlängen zu emittieren, wird in dem Laser nach DE 37 30 563 C1 z.B. mittels eines Prismas innerhalb des Resonatorraumes geschaffen, welches durch die unterschiedliche Brechung zweier Emissionswellenlängen des aktiven Elements die jeweiligen Strahlungsanteile auf verschiedene Laserspiegel umlenkt. Durch diesen Laserspiegeln vorgeordnete Schalter können die Resonatoren alternativ oder simultan wirksam werden.

Laserstrahlung von mehr als zwei Wellenlängen kann der Mehrwellenlänge-Laseroszillator mit geometrisch gekoppelten Resonatoren nach DE 41 10 189 emittieren. Im Resonatorraum wird hier ein polygonales Prisma mit parallelen Seitenflächen angeordnet, welches durch Rotation die einzelnen Resonatoren, jeweils gebildet durch die gleiche Auskoppeleinheit und ein spezielles dispersives Element, wirksam werden läßt.

Sämtliche beschriebene Lösungen haben die Gemeinsamkeit, daß die Resonatorachsen der einzelnen Resonatoren eines Lasers gleich der durch das aktive Element vorgegebenen optischen Achse sind. Um unterschiedliche Resonatoren wirksam werden zu lassen, wird entweder die Strahlung durch feststehende Elemente, wie Filter und Prismen in ihre Anteile unterschiedlicher Wellenlänge getrennt, oder durch sich bewegende Elemente auf hochreflektierende Resonatorelemente unterschiedlicher Reflexionscharakteristik gelenkt.

Die erstgenannte Prinziplösung verursacht Effektivitätsverluste, während die zweitgenannte insbesondere hohe Anforderungen an die Einhaltung der Orts- und Winkelgenauigkeiten der bewegten Elemente stellt.
Darüber hinaus läßt die zwangsweise kollineare Anordnung der Resonatoren im Bereich des aktiven Elements nur eine sehr begrenzte Anzahl von Resonatoren zu .

Entscheidender Nachteil für alle aus dem Stand der Technik bekannten Lösungen ist, daß die Resonatoren nicht unabhängig voneinander aufgebaut sind, sondern sämtlich dasselbe Auskoppelelement verwenden. Der Laser emittiert daher sämtliche Strahlung in eine Richtung.

Der Erfindung liegt die Aufgabe zugrunde einen Laser zu schaffen, der simultan oder alternativ Strahlung gleicher oder unterschiedlicher Betriebsart in beliebige Richtungen innerhalb eines bestimmten Raumwinkels emittieren kann.

Diese Aufgabe wird mit einem erfindungsgemäßen Laser dadurch erreicht, daß ein aktives Element Verwendung findet, welches Strahlung verstärkt, die innerhalb eines Raumwinkels, um ein Normal des aktiven Elements, deutlich größer Null auftrifft. Vorteilhafterweise ist das aktive Element ein Laserkristall, welches in seiner radialen Ausdehnung größer ist als in seiner axialen Ausdehnung. Je größer das Verhältis zwischen diesen beiden Maßen ist, desto größer ist auch der Raumwinkel um die Achse des Laserkristalls, die hier das Normal darstellt. Dadurch, daß das aktive Element Strahlung unterschiedlicher Einfallsrichtung innerhalb dieses Raumwinkels verstärken kann, besteht auch nicht das Erfordernis einer kollinearen Anordnung der Resonatoren. Der konstruktive Aufbau eines erfindungsgemäßen Lasers kann deutlich einfacher gestaltet werden als vergleichbare Laser des Standes der Technik. Die Anzahl der anordenbaren Resonatoren steigt deutlich. Diese sind voneinander unabhängig und in ihrer Relativlage zueinander variabel anordenbar, wodurch beliebige Emissionsrichtungen innerhalb des Rauwinkels realisierbar sind. Es gibt keine Effektivitätsverluste durch strahlaufspaltende Elemente, wie im Stand der Technik gebräuchlich.
Das aktive Element kann statt eines Laserkristalls auch ein anderes Festkörperlasermedium (z.B. Laser-Glas oder Laser-Keramik) oder auch ein Lasermedium in flüssiger (z.B. Farbstofflaser) oder gasförmiger Form sein, das in einer entsprechend geformten Küvette 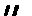 gelagert" ist.
Die Erfindung soll nachfolgend an Hand von Ausführungsbeispielen näher erläutert werden. Dazu zeigen:
- Fig. 1: ein erstes Ausführungsbeispiel mit zwei Resonatoren und einem transmittierenden aktiven Element
- Fig. 2: ein zweites Ausführungsbeispiel mit zwei Resonatoren und einem reflektierenden aktiven Element
- Fig. 3: ein drittes Ausführungsbeispiel mit n Resonatoren und einem reflektierenden aktiven Element

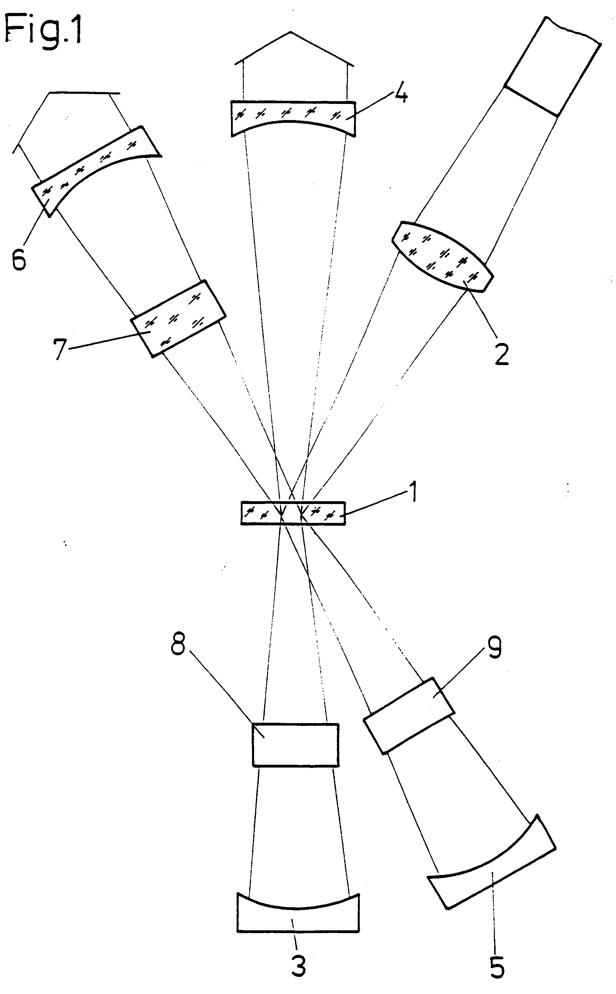

Im ersten Ausführungsbeispiel, dargestellt in Fig. 1, ist das aktive Element ein scheibenförmiger Laserkristall 1, dessen radiale Ausdehnung mindestens sechsfach größer ist als seine axiale Ausdehnung. Durch diese annähernd zweidimensionale Geometrie wird erreicht, daß eine Verstärkung im Laserkristall auch dann erfolgt, wenn der Einfallswinkel der Strahlung zur Achse des Laserkristalls 1 deutlich größer 0° ist. D.h. eine Verstärkung erfolgt auch dann, wenn der Resonator nicht kollinear zur Achse des Laserkristalls 1 angeordnet ist. Dadurch wird es möglich, eine Vielzahl von Resonatoren zueinander nichtkollinear anzuordnen, die denselben Laserkristall als aktives Element benutzen. Vorteilhaft ist ein Einfallswinkel kleiner 20°.
Der scheibenförmige Laserkristall 1 wird durch eine in den Zeichnungen nicht dargestellte fasergekoppelte Laserdiode über eine Koppeloptik 2 gepumpt und gibt eine Strahlung mit einem bestimmten Wellenlängenspektrum ab, wovon die Grundwellenlänge und die zweite Harmonische ausgekoppelt werden sollen. Zur Verstärkung der Grundwellenlänge wurde für den ersten Resonator der senkrechte Strahlungseinfall auf den Laserkristall 1 gewählt, d.h. ein erstes die Grundwellenlänge hochreflektierendes Resonatorelement 3 und ein erstes Auskoppelelement 4 sind so zueinander angeordnet, daß die in sich reflektierte Strahlung in Achsrichtung des Laserkristall 1 verläuft. Der zweite Resonator, der die erste Harmonische emittieren soll, ist um einen Winkel zur Achse des Laserkristalls 1 geneigt, der ein möglichst nahes Anordnen des zweiten Resonatorelementes 5 am ersten Resonatorelement 3 und des zweiten Auskoppelelementes 6 am ersten Auskoppelelement 4 gestattet und enthält den nichtlinear-optischen Kristall 7. Dem ersten Resonatorelement 3 ist ein erster Schalter 8 und dem zweiten Resonatorelement 5 ein zweiter Schalter 9 vorgeordnet. Durch Betätigung der Schalter 8; 9 können die beiden Resonatoren alternativ oder simultan wirksam werden.
Der Laser emittiert somit entweder mit einer Strahlung mit der Grundwellenlänge oder der zweiten Harmonischen oder beiden Wellenlängen.

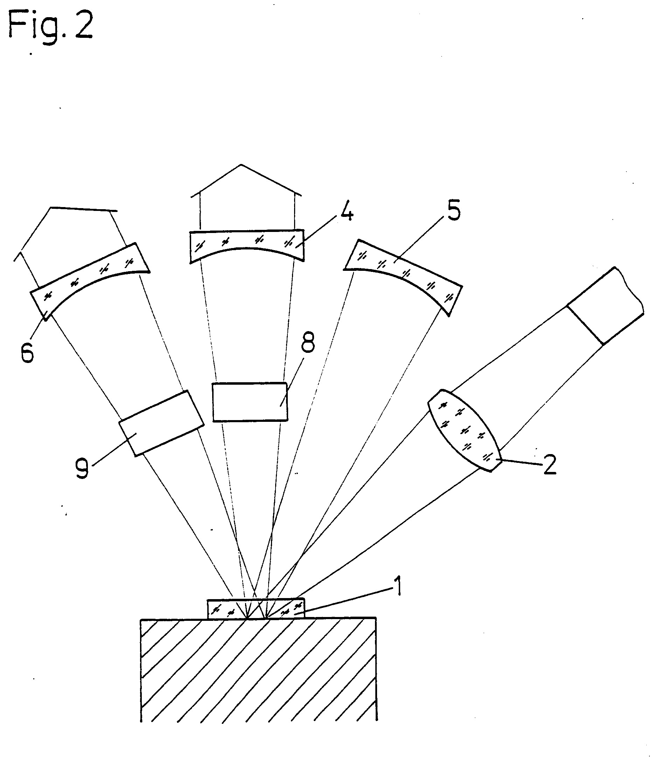

Fig. 2 zeigt ein zweites Ausführungsbeispiel, in dem das aktive Element ein reflektierender scheibenförmiger Laserkristall 1 ist. Dieser dient gleichzeitig als ein erstes Reflektorelement für einen ersten Resonator mit Strahleinfallsrichtung in Achsrichtung des Laserkristalls 1. Der erste Resonator weist darüber hinaus einen ersten Schalter 8 und ein erstes Auskoppelelement 4 auf. Ein zweiter Resonator umfaßt ein zweites Auskoppelelement 5, einen zweiten Schalter 9 und ein zweites hochreflektierendes Resonatorelement 6.
Ein vorteilhafter Nebeneffekt ergibt sich aus der Verwendung eines reflektierenden Laserkristalls 1 durch die einfache Kühlmöglichkeit über das Aufbringen auf eine Wärmesenke.

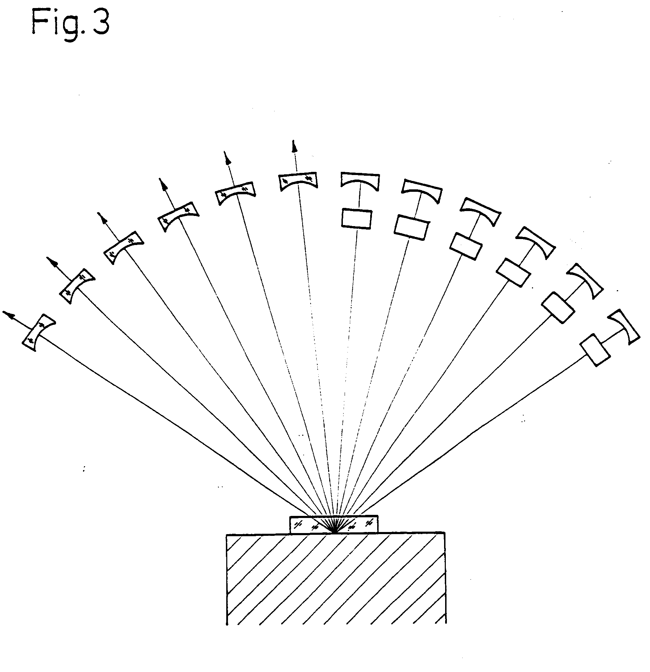

Fig. 3 zeigt als drittes Ausführungsbeispiel einen Laser mit n Resonatoren in einer Ebene angeordnet. Die genaue Anzahl der Resonatoren wird bestimmt durch den Einfallswinkelbereich, den das aktive Element in der Lage ist zu verstärken und die geometrischen Abmessungen der Resonator- und Auskoppelelemente.

Ansonsten analog dem dritten Ausführungsbeispiel sollen die Resonatoren in einem vierten Ausführungsbeispiel räumlich zueinander angeordnet sein. Durch die räumliche Anordnung ist noch einmal eine deutliche Erhöhung der Anzahl der möglichen Reflektoren und Emissionsrichtungen erzielbar.

Über die Möglichkeit hinaus, einen Laser mit einer Vielzahl von Resonatoren aufzubauen, die keiner zusätzlichen strahlbeeinflussenden Elemente bedürfen und die es gestatten, alternativ oder simultan verschiedene Betriebsarten zu realisieren, hat ein erfindungsgemäßer Laser den besonderes Vorteil, daß eine Vielzahl unterschiedlicher Emissionsrichtungen erzielt werden können.

## Patentansprüche

1. Laser mit einem aktiven Element und mindestens zwei Resonatoren, jeweils bestehend aus einem hochreflektierenden Resonatorelement und einem Auskoppelelement, welche die Strahlung des aktiven Elementes in sich reflektieren, dadurch gekennzeichnet,
daß das aktive Element auftreffende Strahlungen aus einem Raumwinkelbereich um ein Normal des aktiven Elements verstärkt, der deutlich größer Null ist und die Resonatoren so zu dem aktiven Element angeordnet sind, daß jeder in einem anderen Einfallswinkel innerhalb des Raumwinkelbereiches die Strahlung auf das aktive Element reflektiert.

2. Laser nach Anspruch 1, dadurch gekennzeichnet,
daß der Raumwinkelbereich 20° beträgt.

3. Laser nach Anspruch 1 oder 2, dadurch gekennzeichnet,
daß das aktive Element eine radiale und eine axiale Ausdehnung aufweist und die radiale Ausdehnung um ein Vielfaches größer ist als die axiale Ausdehnung und die Achse als Normal dient.

4. Laseranordnung nach Anspruch 3, dadurch gekennzeichnet,
daß das aktive Element eine annähernd zweidimensionale Geometrie aufweist.

5. Laser nach Anspruch 4, dadurch gekennzeichnet,
daß das aktive Element ein Laserkristall ist.

6. Laser nach Anspruch 4, dadurch gekennzeichnet,
daß das aktive Element ein Laser-Glas ist.

7. Laser nach Anspruch 4, dadurch gekennzeichnet,
daß das aktive Element eine Laser-Keramik ist.
